# EUROPEAN PATENT SPECIFICATION

(11) **EP 4 184 935 B1**
(45) Date of publication and mention of the grant of the patent: **01.10.2025**
(21) Application number: 21461622.9
(22) Date of filing: 19.11.2021
(51) Int. Cl.: H04Q 9/00, E03B 9/06

(54) **A SMART HYDRANT CAP AND A SYSTEM FOR MONITORING**
INTELLIGENTE HYDRANTKAPPE UND SYSTEM ZUR ÜBERWACHUNG
BOUCHON INTELLIGENT POUR BORNE D'INCENDIE ET SYSTÈME DE SURVEILLANCE

(43) Date of publication of application: 24.05.2023
(73) Proprietor: Cthings.Co Spolka Z Ograniczona Odpowiedzialnoscia, 02-653 Warszawa (PL)
(72) Inventor: Wierzejski, Arnold, 08-110 Siedlce (PL); Vinod, Shreyas, 08-110 Siedlce (PL); Jankowiak, Piotr, 08-110 Siedlce (PL)
(74) Representative: Bury & Bury

(56) References cited:
- US-A1- 2014 373 941
- US-A1- 2017 216 645
- US-A1- 2017 237 158

## Description

### Field of the invention

The invention concerns a smart hydrant cap and a system for monitoring a pipeline with hydrants.

### State of the art

Reliability of fire protection equipment such as hydrants is critical to safety. At the same time, hydrants are used infrequently which makes it difficult to detect failures quickly. Various solutions are used to detect and predict faults in their operation.

An international patent application WO2018154571 discloses an apparatus for identifying irregular flow, at the entrance of hydrant outlet. The apparatus is comprised of: a ring shaped housing having interface for connecting on one end the hydrant pipe end and on the other end to the hydrant outlet part, at least two flow detection sensors positioned in said ring shaped housing, located at predefined distance for each other, a processor for analyzing in real-time sensors measurements, by checking time differences between the detectors received signals and differences between measurements level of the detectors, wherein based on said analysis is determined if the liquid flow is in outward direction form the hydrant or in ward direction from into the hydrant and for calculating flow quantity and communication module for sending alerts based on the analyzed data.

A utility model CN207878559U concerns a control system for a fire hydrant, wherein a terminal is placed on the fire hydrant. A collection of terminals communicates with a server via a telecommunications network. The terminal contains a microprocessor, a pressure sensor and a valve open/close sensor, a valve overturn sensor, a memory module, a power module, and an identity verification and alarm module. The solution is designed to collect data on water pressure, information on the status of valve opening and closing, information on fire hydrant inclination and information on possible knockdown as well as the possibility of early detection of abnormal operation of a fire hydrant.

State of the art solutions do not detect hydrant damage associated multiple environmental exposures especially but not only related with underground hydrants, including leaks above hydrant cap, leaks inside hydrant cap, improper use of hydrant, damage due to freezing, mechanical impacts and slow degeneration such as from corrosion. It is also noted that often hydrants are not fully operational because access to the hydrant is blocked. US2017216645A1 discloses a device for detecting adverse events in a fire hydrant, the device comprising a housing configured to mount to an exterior of the fire hydrant, the housing having a surface in register with the exterior of the fire hydrant, the surface having an aperture therein, a cover enclosing the housing and mounted to the fire hydrant at the surface. The housing further includes a controller, a transceiver, vibration sensor and a water sensor. US2014/373941A1 provides a novel protective fire hydrant cover.

### Summary of the invention

A smart hydrant cap with an electronic sensor system having a battery enclosed in a body of a cap, and a control unit having a first radiocommunication module, an authentication module, a first pressure sensing module. This pressure sensing module enables detection of hydrant being under water. It is important especially for underground hydrants in winter. Authentication module enables monitoring if the cap is operated by authorized person. The body of the hydrant cap comprises a base adapted for sealing a pipe, a top cover and a battery cage located between top cover and a base. Such construction makes it possible to place battery and sensor system inside the cap, provide a mechanical interfaces for popular hydrant systems, provide enough sealing to meet requirements for hydrant caps and simultaneously provide enough space in battery cage for large batteries having capacities even above 30 Ah. That feature combined with use of energy-efficient electronic modules enables even more than 7 years of battery life. The authentication module and the first radiocommunication module are located above battery cage. This location makes it easier to accommodate antennas enabling authentication and enable more reliable communication. The hydrant cap further comprises a vibration sensor, a second pressure sensing module located in bottom part of a base and a radar module located above the battery cage adapted to transmit radiation outside the top cover. Vibration sensors in smart caps enable use of smart caps in a sensor network monitoring vibrations in the pipeline and early detection of anomalies. Second pressure sensor allows detecting situation in which the cap is closed but hydrant valve is left open. It is difficult to detect but in long term contributes to malfunction.

Advantageously electronic sensor system includes an ambient pressure and/or temperature and/or humidity sensing module.

Advantageously electronic sensor system includes an accelerometer. Accelerometer enables detection if smart cap is unscrewed or tampered with and report to the external server with the first radiocommunication interface. Advantageously the authentication module is NFC compatible.

Smart hydrant cap advantageously has a second radiocommunication module compatible with Bluetooth Low Energy and/or NFC. This interface enables communication with user equipment of authorized person operating cap and transmission of data when for any reason the network of the first radiocommunication module is not available or inconvenient to use. It can also be the authentication module. In particular NFC compatible second radiocommunication module enables passive authentication. Nevertheless authentication can be also realized via Bluetooth with a use of mobile user equipment such as smartphone as an authentication token.

Advantageously the first radiocommunication module is compatible with LTE. LTE networks usually cover locations of hydrants, yet they are not always easily accessible underground and not very well suited for internet of things IoT applications with infrequent data transmission.

Alternatively the first radiocommunication module is compatible with LoRa. LoRa networks have lower coverage but are dedicated for IoT and for adapting the coverage to specific locations. Furthermore it consumes less energy.

Advantageously the top cover is made of dielectric material. That enables keeping antennas inside the cap. Dielectric materials can be successfully used thanks to three part design including base, top cover and battery cage and adequate sealing of parts. For devices with metal casing antennas need to be located outside. On the other hand the metal casing shields electronic devices from radio interferences. However underground hydrants are not very much exposed to interferences from radiation sources as they are protected by the ground.

Antenna of the radar module is advantageously located below top cover.

Antenna of the first radiocommunication module is advantageously located below top cover.

A system for monitoring a pipeline with hydrants, comprising a server with database and radiocommunication network connecting the server with smart hydrant caps according to the invention.

### Short description of figures

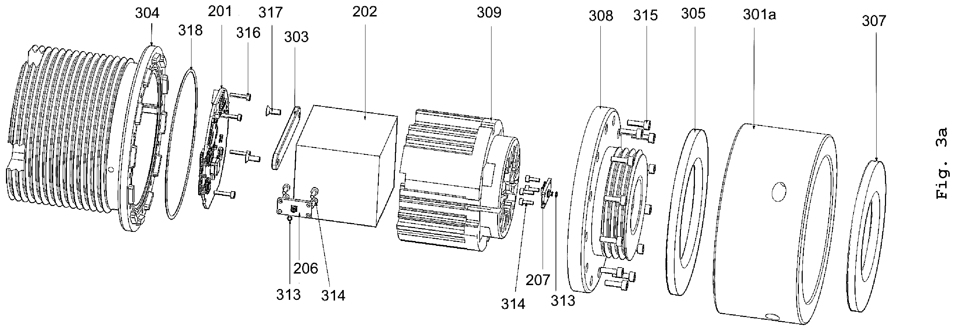

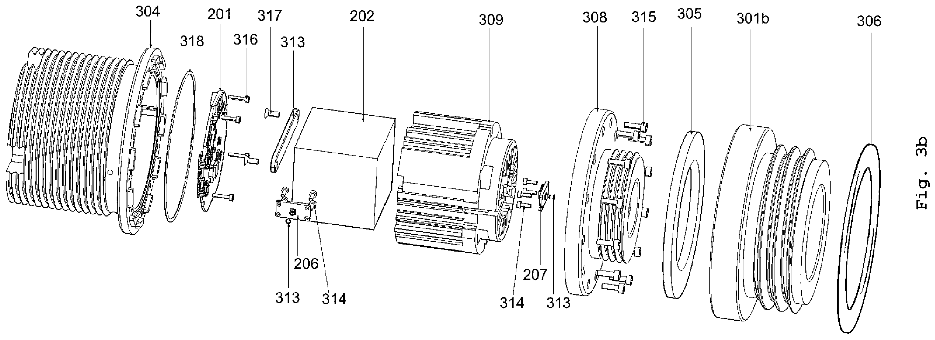

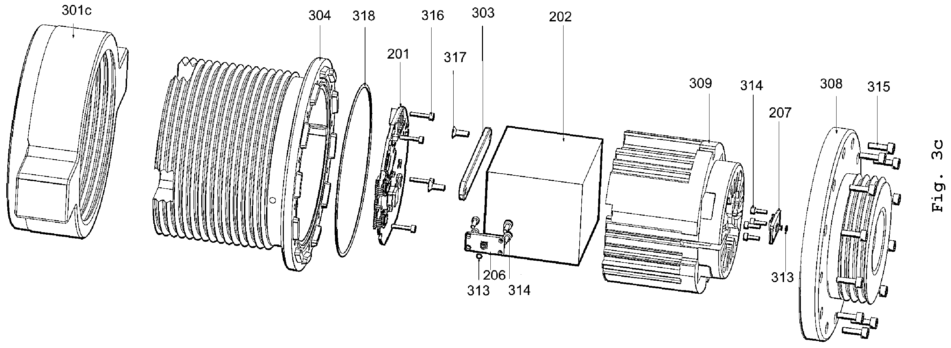

The invention is described below in greater detail with reference to attached drawings, wherein Fig. 1 shows schematically a cap according to the invention mounted in underground hydrant, Fig. 2 shows schematically a cross section of a cap according to the invention, Fig. 3a-c show exploded views of smart caps according to the invention with adapters for Billman, Threaded and Bayonet type of hydrant, and Fig. 4 shows a generalized scheme of the system according to the invention.

### Embodiments of the invention

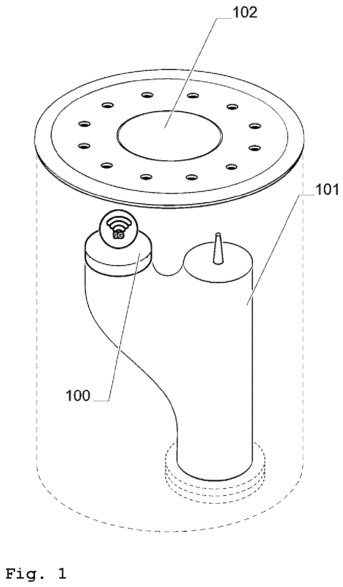

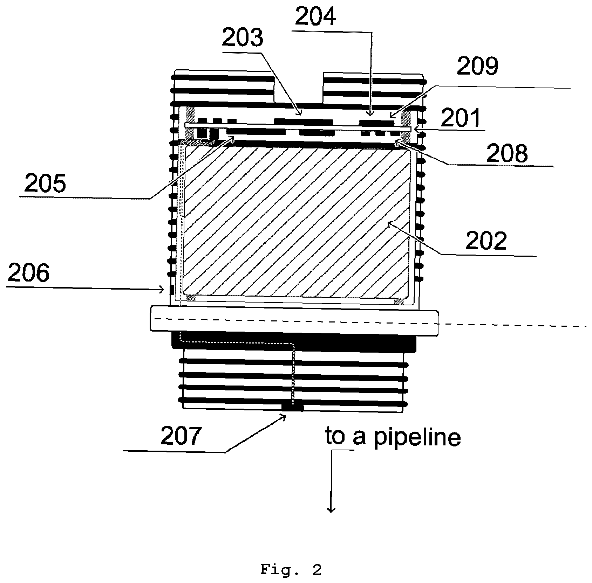

A smart hydrant cap 100 with an electronic sensing system according to the invention mounted in an underground hydrant 101 in manhole 102 is schematically shown in Fig. 1. A cross section of the smart hydrant cap is shown in Fig. 2. The electronic sensor system has a 3 V battery as a power source, and a printed circuit board 201 with a control unit and modules connected thereto. Large battery cage makes it possible to use battery having capacity of 30 Ah or even 70 Ah. Lower capacities may be enough for infrequent measurement transmissions.

Control unit according to present embodiment is nRF52840 ultra-low power microcontroller located on printed circuit board 201 built around the 32-bit ARM Cortex-M4 CPU with floating point unit running at 64 MHz. The microcontroller nRF52840 is multiprotocol. It has protocol support for Bluetooth LE, Bluetooth mesh, Thread, Zigbee, 802.15.4, ANT and 2.4 GHz proprietary stacks. Low energy consumption is achieved using an on-chip adaptive power management system. The built-in floating point unit (FPU) provides enough computational capability required for the Smart Hydrant Cap features.

NFC-A module is used as an authentication module 204.

The first radiocommunication module is 205 is a Low Power Wide-Area (LWPA) network modem with BG95-M3 chip which supports LTE Cat M1/Cat NB2/EGPRS and integrated GNSS and which meets the 3GPP Release 14 specification. The BG95-M3 achieves maximum downlink rates of 588Kbps and uplink rates of 1119Kbps under LTE Cat M1. The module's integrated RAM and flash memory enables ultra-low power consumption. Alternatively the first radiocommunication module 205 can be based on Semtech SX1276 chip supporting LoRaWAN 433 MHz and LoRaWAN 868-915 MHz.

Quectel BG95 provides the second radiocommunication interface - Bluetooth low energy 5.2. They also have an integrated NFC-A module and GNSS GPS/GLONASS/BeiDou/Galileo/QZSS positioning system. Although location of the smart cap does not change often, positioning system can be advantageous at installation step as a double check and also for locating the cap if it is unscrewed by unauthorized person.

The first and second pressure sensing modules **206, 207** are based on MS5837-30BA module. The first pressure sensing module **206** is located inside top cover **304,** and is exposed to outside pressure via opening provided in top cover **304** and sealed with o-ring **313.** The second pressure sensing module **207** is fixed to the base **308** with screws **314** so that it is exposed to pressure inside a pipe closed with the smart hydrant cap **100** via opening provided in the base **308** and sealed with o-ring **313.** Both pressure sensors are connected to the control module located on printed circuit board **201.** Accordingly the first pressure sensing module **206** can detect smart cap being under water which can cause malfunction in any season or destruction of entire hydrant in winter. The second pressures sensing module **207** is used to detect open position of the valve when cap is tightly screwed to the pipeline.

Top cover **304** is made of dielectric material. Therefore radar module **203** located on printed circuit board **201** and directed outside smart cap **100** is able to surveil surroundings. In underground hydrant radar module **203** is useful for detection of possible debris inside shaft above hydrant or the absence of manhole. In over ground hydrant it is possible to use the radar module to detect if path to the hydrant is not blocked. Radars operating at frequencies of 20 GHz or higher provide sufficient resolution. Acconeer A111 60 GHz radar module proved to be useful.

Configuration of the smart hydrant cap according to the invention enables meeting PN16 norm (16 bar) with dielectric casing, which contributes to ease of use radar and radiocommunication equipment inside the smart cap. Both radar and radiocommunication antenna **209** can be located below dielectric top cover, inside the cap. Therefore mechanical damage of antennas can be avoided and it is easier to keep the top cover watertight. It is possible to use so called "virtual antenna" based on antenna booster NN03-310 such as available at, https://ignion.io/ .

Printed circuit board **201** comprises also an accelerometer. Bosch BNO055 9 DoF Sensor proved to be useful to detect tamper and movement detection as well as tilt detection.

Vibration sensor is also integrated on printed circuit board 201. In present embodiment STMicroelectronics IIS3DWB High-Bandwidth Vibration Sensor has been used. This sensor is used in conjunction with the accelerometer and magnetometer to measure the passive/natural frequency response of the pipeline system during off-peak hours. This data is sent to the cloud for application of machine learning models in order to detect leaks. Additionally, large shifts in frequency response can be used to detect hard faults in the hydrant (for example, a partially open outlet). In order to maximize the amount of frequency information available from the data, the chosen sensor has a bandwidth of 6 kHz. Vibration sensor adds support for: passive leak detection and pipeline analysis, hydrant fault detection, reliable detection of opening of hydrant outlet (if the cap is installed) when used for sensor fusion with pressure sensors.

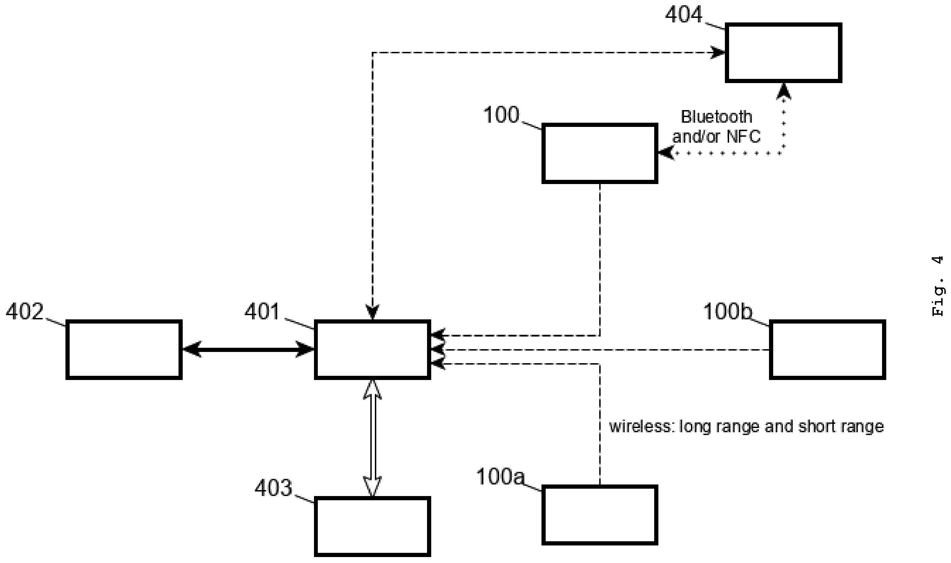

The system for monitoring pipelines comprising hydrants, according to the invention comprises a server **401** with database **403** and radiocommunication network connecting the server **401** smart caps **100, 100a, 100b,** applied in the hydrants connected to the pipeline. Server **401** comprises software adapted to receive data from the smart caps **100, 100a, 100b,** in the database **403.** Simplified block diagram of the system is shown in Fig. 4. The server **401** receives data sent from the smart caps 100, **100a, 100b** with the first radiocommunication modules **205** and stores in local or remote database **403.** The server **401** is programmed to be administered remotely via wired or wireless connection with terminal **402.** Terminal **402** can be used to add use or maintenance information to the database **403.** Persons performing use or maintenance of the hydrants may be provided with mobile devices **404** having NFC/Bluetooth compatible communication means and wireless connection with the server **401.** Converging information about particular cap received via NFC/Bluetooth and communication with the server **401** makes it easier to enter maintenance/use data.

Embodiments discussed above differ in adapters to Billman, Threaded and Bayonet variants of hydrants. Construction is versatile and therefore routine mechanical modification can provide compatibility with other standards. Person installing cap according to the invention needs to: choose an applicable adapter **301a, 301b, 301c** for Threaded Billman or Bayonet standard respectively to use cap according to the invention with particular type of hydrant. Then existing cap needs to be replaced with smart cap 100 according to the invention and deployment command needs to be sent to the server **401** in order to start normal operation.

Top cover **304** accommodates main printed circuit board PCB **201** comprising the control module and most of the sensors. The PCB is mounted to the battery bracket **303** and battery cage **309** with screws **316.** Battery bracket is connected to the battery cage with counter screw **317.** Battery **202** is placed inside the battery cage **309.** Battery cage **309** is placed between the base **308** and top cover **304** in a tight fit. The base **308** and the top cover are screwed together with main screws **315** and sealed main with o-ring **318.** The top cover **304** has a hole to accommodate the first pressure sensor **206** which is located on a PCB screwed to the wall with screws **314.** The first pressure sensor **206** is sealed in the opening with o-ring **313.**

The second pressure sensor **207** is located in a base **308.** The base has a central opening in which the second pressure sensor **207** is sealed with o-ring **313.** The central opening is provide in a threaded part of the base applicable for connecting with the hydrant or with one of the adapters. Adapters may additionally be sealed with adapter o-rings **305, 306, 307.**

Deployment command may be sent using an NFC-enabled mobile phone or similar device, scan the NFC tag in a cap according to the invention by bringing them into close proximity. This will give can trigger the control unit of the cap to communicate with the server **401** via first communication module and send initialization information in due course - typically within 24 hours.

Alternatively after scanning the NFC tag initialization information can be sent to the mobile device via Bluetooth and forwarded via the mobile device to the server **401.**

Smart cap according to the invention provides periodic "Heartbeat" - The device transmits a complete sensor & network status message once every "heartbeat" cycle. This cycle is configured based solely on the business application requirements and for most application reasonable cycle ranges between 24 hours to 7 days. The length of the cycle affects the total operational lifecycle of the device.

Communication may also be triggered by asynchronous events - the device performs measurements using all on-board sensors at a set frequency set by business requirements, typically 10 minutes, and transmits immediate asynchronous notifications on detection of the following events:
- Abnormal observation on any pressure sensor - if any individual measurement shows deviation from normal atmospheric pressure of ±200 mbar (approximately ±0.2 atm).
- Abnormal observation on any temperature sensor - if any individual measurement shows signs of exceeding operational limits of the device; exact threshold values are determined by engineers based on the installation location and typical environmental conditions.
- Abnormal observation on internal an ambient pressure, temperature and humidity sensing module **208** - if a measurement is made suggesting conditions exceeding relative humidity operational limits of the device; exact threshold values are determined by engineers based on the installation location and typical environmental conditions.
- Detection of movement of the device - if the internal accelerometer detects accelerations beyond the set threshold, typically ±0.5 g.
- Detection of change in frequency spectrum of vibrational background - if the vibration sensor detects a significant shift in the average frequency spectrum of vibrations; this data is further used by the online platform for the purpose of leak detection as well as detection of fully or partially open value of the fire hydrant.
- Detection of manhole that has been erroneously left open - if the built-in radar module **203** detects that the manhole cover above the hydrant has been left open for a significant period of time (configured based on business requirements).
- Detection of debris between smart cap and manhole or other obstacles with radar module **203.**

The data collected from the smart caps according to the invention connected to hydrants shall be used in the following ways (this list of use cases is not exhaustive):
- Detection of fire hydrant being under water;
- Detection of fire hydrant having a partially open valve;
- Leakage or build-up of water in outlet of fire hydrant;
- Detection of tamper and unauthorized use;
- Detection of leaks in pipelines fire hydrants to which smart caps are connected;
- Detection of unintentional or erroneous open manholes.

In the event of malfunction, maintenance personnel may be required to operate on the fire hydrant without having notified the server **401.** It entails following course of events. Hydrant is immediately used or subjected to maintenance - whatever emergency requires. Electronic sensor system detects that the smart cap **100** is touched, moved, or otherwise handled in any way. The control module shall send an immediate notification to the cloud platform regarding the event with the first radiocommunication module **205.** At this point, the maintenance personnel or others responsible may either: enter information about the maintenance/use event on ex post facto basis into the server **401** or use NFC-enabled user equipment recognized in the system, scan the NFC tag on the Smart Cap by bringing them into close proximity-this and transfer the date to the server on site or later on. The same can be done on server via other interfaces.

When the Smart Cap device is handled without prior existing information about upcoming maintenance, critical alerts shall be sent to responsible personnel about the event.

If information about the maintenance event is authorized post-factum, the online platform shall automatically correlate this information, reduce the severity of the event, and notify responsible personnel.

### Reference signs list:

- 100, 100a, 100b: Smart hydrant cap
- 101: Hydrant
- 102: Manhole
- 201: Printed circuit board
- 202: Battery
- 203: Radar module
- 204: Authentication module (NFC)
- 205: First radiocommunication module
- 206: First pressure sensing module
- 207: Second pressure sensing module
- 208: Ambient temperature, humidity and pressure sensing module
- 209: Radiocommunication antenna
- 301a: Adapter 3 Billman
- 301b: Adapter 2 Threaded
- 301c: Adapter 1 Bayonet
- 303: Battery Bracket
- 304: Top cover
- 305: Adapter O-ring
- 306: Adapter O-ring
- 307: Adapter O-ring
- 308: Base
- 309: Battery Cage
- 313: Pressure sensor O-ring
- 314: Pressure sensor screw
- 315: Main Screw
- 316: Screw PCB Plate
- 317: Counter screw
- 318: Main O-ring
- 401: Server
- 402: Terminal
- 403: Database
- 404: Mobile devices

## Claims

1. A smart hydrant cap **(100)** comprising
a base **(308)** adapted for sealing a pipe,
a top cover **(304)** and
a battery cage **(309)** located between top cover **(304)** and a base **(308)**
an electronic sensor system having a battery **(202)** enclosed in a body of a cap, and a control unit having
a first radiocommunication module **(205),** located above battery cage **(309)**
a vibration sensor, and
a first pressure sensing module **(206)**
wherein, the body of the hydrant
**characterized in that**
the hydrant cap **(100)** further comprises
an authentication module,
a second pressure sensing module **(207)** located in bottom part of a base **(308)** and
a radar module **(203)**
wherein
the authentication module and the radar module **(203)** are located above battery cage **(309),** and the radar module **(203)** is adapted to transmit radiation outside the top cover **(304).**

2. Smart hydrant cap **(100)** according to claim 1, wherein electronic sensor system includes an ambient pressure, temperature and humidity sensing module **(208).**

3. Smart hydrant cap according to claim 1 or 2, wherein electronic sensor system includes an accelerometer.

4. Smart hydrant cap according to claim 1 or 2 or 3, **characterized in that** the authentication module is NFC compatible.

5. Smart hydrant cap according to any preceding claims, wherein it further has a second radiocommunication module compatible with Bluetooth Low Energy and/or NFC.

6. Smart hydrant cap according to claim 5, wherein the second radiocommunication module is authentication module.

7. Smart hydrant cap according to any of claims 1 to 6, wherein the first radiocommunication module **(205)** is compatible with LTE.

8. Smart hydrant cap according to any of claims 1 to 6, wherein the first radiocommunication module **(205)** is compatible with LoRa.

9. Smart hydrant cap according to any of claims 1 to 8, wherein the top cover **(304)** is made of dielectric material.

10. Smart hydrant cap according to the claim 9, **characterized in that** antenna of the radar module is located below top cover **(304).**

11. Smart hydrant cap according to the claim 9 or 10, **characterized in that** antenna of the first radiocommunication module **(205)** module is located below top cover **(304).**

12. A system for monitoring a pipeline with hydrants, comprising a server **(401)** with database **(403)** and radiocommunication network connecting the server (401) with smart hydrant caps **(100, 100a, 100b)** according to any of claims 1-11.

## Patentansprüche

1. Intelligente Hydrantenkappe **(100),** umfassend
einer Basis **(308),** welche dazu eingerichtet ist, ein Rohr abzudichten,
eine obere Abdeckung **(304),** und
einen Batteriekäfig **(309),** welcher zwischen der oberen Abdeckung **(304)** und der Basis **(308)** angeordnet ist
ein elektronisches Sensorsystem aufweisend eine Batterie **(202),** welche in einem Kappenkörper untergebracht ist, und eine Steuereinheit mit
ein oberhalb des Batteriekäfigs **(309)** angeordnetes erstes Funkkommunikationsmodul **(205)**
einen Vibrationssensor, und
ein erstes Druck-Erfassungsmodul **(206)**
wobei der Körper des Hydranten
**dadurch gekennzeichnet, dass**
die Hydrantenkappe **(100)** ferner umfasst
ein Authentifizierungsmodul,
ein im Unterteil der Basis **(308)** angeordnetes zweites Druck-Erfassungsmodul **(207),** und
ein Radarmodul **(203)**
wobei
das Authentifizierungsmodul und das Radarmodul **(203)** oberhalb des Batteriekäfigs **(309)** angeordnet sind und das Radarmodul **(203)** dazu eingerichtet ist, Strahlung außerhalb der oberen Abdeckung **(304)** zu senden.

2. Intelligente Hydrantenkappe **(100)** nach Anspruch 1, wobei das elektronische Sensorsystem ein Umgebungsdruck-, Temperatur- und Feuchtigkeits-Erfassungsmodul **(208)** umfasst.

3. Intelligente Hydrantenkappe nach Anspruch 1 oder 2, wobei das elektronische Sensorsystem einen Beschleunigungsmesser umfasst.

4. Intelligente Hydrantenkappe nach Anspruch 1 oder 2 oder 3, **dadurch gekennzeichnet, dass** das Authentifizierungsmodul NFC-kompatibel ist.

5. Intelligente Hydrantenkappe nach einem der vorhergehenden Ansprüche, wobei sie ferner ein zweites Funkkommunikationsmodul aufweist, welches mit Bluetooth Low Energy und/oder NFC kompatibel ist.

6. Intelligente Hydrantenkappe nach Anspruch 5, wobei das zweite Funkkommunikationsmodul ein Authentifizierungsmodul ist.

7. Intelligente Hydrantenkappe nach einem der Ansprüche 1 bis 6, wobei das erste Funkkommunikationsmodul (205) mit LTE kompatibel ist.

8. Intelligente Hydrantenkappe nach einem der Ansprüche 1 bis 6, wobei das erste Funkkommunikationsmodul **(205)** mit LoRa kompatibel ist.

9. Intelligente Hydrantenkappe nach einem der Ansprüche 1 bis 8, wobei die obere Abdeckung **(304)** aus dielektrischem Material hergestellt ist.

10. Intelligente Hydrantenkappe nach Anspruch 9, **dadurch gekennzeichnet, dass** die Antenne des Radarmoduls unter der oberen Abdeckung **(304)** angeordnet ist.

11. Intelligente Hydrantenkappe nach Anspruch 9 oder 10, **dadurch gekennzeichnet, dass** die Antenne des ersten Funkkommunikationsmoduls **(205)** unter der oberen Abdeckung **(304)** angeordnet ist.

12. Überwachungssystem für Rohrleitungen mit Hydranten, umfassend einen Server **(401)** mit Datenbank **(403)** und ein Funkkommunikationsnetz, welches den Server **(401)** mit den intelligenten Hydrantenkappen **(100, 100a, 100b)** nach einem der Ansprüche 1 bis 11 verbindet.

## Revendications

1. Bouchon intelligent pour borne d'incendie **(100)** comprenant
une base **(308)** conçue pour sceller un tuyau,
un couvercle supérieur **(304)** et
une cage de batterie **(309)** située entre le couvercle supérieur **(304)** et une base **(308)**
un système de capteur électronique ayant une batterie **(202)** enfermée dans un corps d'un bouchon, et une unité de commande ayant
un premier module de radiocommunication **(205),** situé au-dessus de la cage de batterie **(309)**
un capteur de vibrations, et
un premier module de détection de pression **(206)**
dans lequel le corps de la borne d'incendie
**caractérisé en ce que**
le bouchon pour borne d'incendie **(100)** comprend en outre
un module d'authentification,
un deuxième module de détection de pression **(207)** situé dans la partie inférieure d'une base **(308)** et
un module radar **(203)**
dans lequel
le module d'authentification et le module radar **(203)** sont situés au-dessus de la cage de batterie **(309),** et le module radar **(203)** est conçu pour transmettre le rayonnement à l'extérieur du couvercle supérieur **(304).**

2. Bouchon intelligent pour borne d'incendie **(100)** selon la revendication 1, dans lequel le système de capteur électronique comporte un module de détection de pression, de température et d'humidité ambiantes **(208).**

3. Bouchon intelligent pour borne d'incendie selon la revendication 1 ou 2, dans lequel le système de capteur électronique comporte un accéléromètre.

4. Bouchon intelligent pour borne d'incendie selon la revendication 1 ou 2 ou 3, **caractérisé en ce que** le module d'authentification est compatible NFC.

5. Bouchon intelligent pour borne d'incendie selon l'une quelconque des revendications précédentes, dans lequel il comporte en outre un deuxième module de radiocommunication compatible Bluetooth à basse énergie et/ou NFC.

6. Bouchon intelligent pour borne d'incendie selon la revendication 5, dans lequel le deuxième module de radiocommunication est un module d'authentification.

7. Bouchon intelligent pour borne d'incendie selon l'une quelconque des revendications 1 à 6, dans lequel le premier module de radiocommunication **(205)** est compatible avec LTE.

8. Bouchon intelligent pour borne d'incendie selon l'une quelconque des revendications 1 à 6, dans lequel le premier module de radiocommunication **(205)** est compatible avec LoRa.

9. Bouchon intelligent pour borne d'incendie selon l'une quelconque des revendications 1 à 8, dans lequel le couvercle supérieur **(304)** est constitué d'un matériau diélectrique.

10. Bouchon intelligent pour borne d'incendie selon la revendication 9, **caractérisé en ce que** l'antenne du module radar est située sous le couvercle supérieur **(304).**

11. Bouchon intelligent pour borne d'incendie selon la revendication 9 ou 10, **caractérisé en ce que** l'antenne du premier module de radiocommunication (205) est située sous le couvercle supérieur **(304).**

12. Système de surveillance d'une conduite avec des bornes d'incendie, comprenant un serveur **(401)** avec une base de données **(403)** et un réseau de radiocommunication connectant le serveur **(401)** avec des bouchons intelligents pour borne d'incendie **(100, 100a, 100b)** selon l'une quelconque des revendications 1 à 11.
